# FASCICULE DE BREVET EUROPEEN

(11) **EP 2 784 680 B1**
(45) Date de publication et mention de la délivrance du brevet: **03.06.2020**
(21) Numéro de dépôt: 14161597.1
(22) Date de dépôt: 25.03.2014
(51) Int. Cl.: G06F 11/28

(54) **Procédé d'exécution d'un logiciel sécuritaire et d'un logiciel non sécuritaire entrelacés**
Verfahren zur Ausführung einer Interlacing-Sicherheitssoftware und einer nicht gesicherten Interlacing-Software
Method for running interlaced secured software and non-secured software

(30) Priorité: 29.03.2013 FR 1352910
(43) Date de publication de la demande: 01.10.2014
(73) Titulaire: ALSTOM Transport Technologies, 93400 Saint-Ouen (FR)
(72) Inventeur: Linares, Michel, 92700 COLOMBES (FR); Van Den Hende, Jean-Christophe, 92800 PUTEAUX (FR)
(74) Mandataire: Lavoix

(56) Documents cités:
- HARI KANNAN ET AL: "Decoupling Dynamic Information Flow Tracking with a dedicated coprocessor", DEPENDABLE SYSTEMS&NETWORKS, 2009. DSN '09. IEEE/IFIP INTERNATIONAL CONFERENCE ON, IEEE, PISCATAWAY, NJ, USA, 29 juin 2009 (2009-06-29), pages 105-114, XP031533178, ISBN: 978-1-4244-4422-9
- FOCARDI R ET AL: "Information flow ecurity in dynamic contexts", COMPUTER SECURITY FOUNDATIONS WORKSHOP, 2002. PROCEEDINGS. 15TH IEEE 24-26 JUNE 2002, PISCATAWAY, NJ, USA,IEEE, 24 juin 2002 (2002-06-24), pages 288-300, XP010595507, ISBN: 978-0-7695-1689-9

## Description

L'invention a pour domaine celui des procédés d'exécution d'un logiciel sécuritaire et d'un logiciel non sécuritaire entrelacés, au moins une donnée de sortie générée en sortie d'un module dudit logiciel non sécuritaire étant utilisée en tant que donnée d'entrée appliquée en entrée d'un module du logiciel sécuritaire.

Un logiciel est un programme d'ordinateur dont les instructions, stockées dans une mémoire d'un calculateur, sont propres à être exécutées par un processeur de ce calculateur.

Un logiciel sécuritaire est un logiciel devant être exécuté en sécurité, c'est-à-dire de manière à en garantir le bon fonctionnement et ceci avec un niveau de confiance déterminé. Cela signifie que la survenue d'une défaillance contraire à une exigence de sécurité dans l'exécution de ce logiciel sécuritaire a une probabilité déterminée. Par exemple, la norme IEC 61 508 définit plusieurs niveaux de sécurité entre les niveaux SIL0, probabilité de survenue d'une défaillance élevée, à SIL4, probabilité de survenue d'une défaillance faible. Pour une exécution en sécurité, le calculateur exécutant les instructions du logiciel sécuritaire doit répondre à certains critères de fonctionnement. On parle de calculateur de sécurité.

Dans le présent document, sera dénommé logiciel non sécuritaire un logiciel dont l'exécution n'est pas contrainte en termes de sûreté de fonctionnement ou est moins contrainte que celle du logiciel sécuritaire. Par exemple, si le logiciel sécuritaire relève du niveau SIL2, sera considéré comme non sécuritaire un logiciel relevant du niveau SILO. Dans le présent document, un logiciel non sécuritaire est exécuté sur un calculateur dénommé « calculateur non de sécurité », c'est-à-dire un calculateur répondant à des critères de fonctionnement compatibles avec le niveau de sécurité du logiciel non sécuritaire.

Un logiciel se décompose en une pluralité de modules élémentaires.

L'exécution par le processeur d'un calculateur des instructions correspondant à un module du logiciel constitue un processus, ou tâche, élémentaire.

Un module comporte une section d'entrée, pour l'acquisition de données d'entrée, par exemple par lecture des valeurs courantes de ces données d'entrée dans un espace déterminé de la mémoire du calculateur ; une section de traitement, pour le calcul des valeurs de données de sortie à partir des valeurs acquises des données d'entrée ; et une section de sortie, pour l'écriture des valeurs calculées des données de sortie, dans un espace déterminé de la mémoire du calculateur.

Sauf dysfonctionnement, l'exécution d'un module une fois lancée est toujours réalisée sans interruption jusqu'à son terme, c'est-à-dire jusqu'à la génération de données de sortie.

En fonction de l'architecture du logiciel, les données de sortie d'un premier module peuvent constituer les données d'entrée d'un second module. Il existe donc un flux de données débutant avec un évènement initial, telle qu'une donnée initiale mise à jour en entrée du logiciel, et se terminant avec un évènement de sortie, tel que la fin de l'exécution d'un module, en passant par différentes données intermédiaires échangées entre les modules du logiciel.

Un flux de données complet recouvre plusieurs cycles d'exécution successifs du logiciel. En effet, à chaque cycle, seuls sont effectivement exécutés les modules pour lesquels des données d'entrée mises à jour sont disponibles au début du cycle ou seront disponibles au cours du cycle au moment de l'exécution du module considéré. Un module ne sera exécuté qu'une seule fois sur des données d'entrée mises à jour.

Deux logiciels sont dits entrelacés, lorsqu'un module de l'un des deux logiciels admet, parmi ces différentes données d'entrée, au moins une donnée de sortie d'un module de l'autre logiciel. On a ainsi un flux de données dans lequel il y a un échange de données entre les deux logiciels exécutés, de sorte que les deux logiciels sont interdépendants.

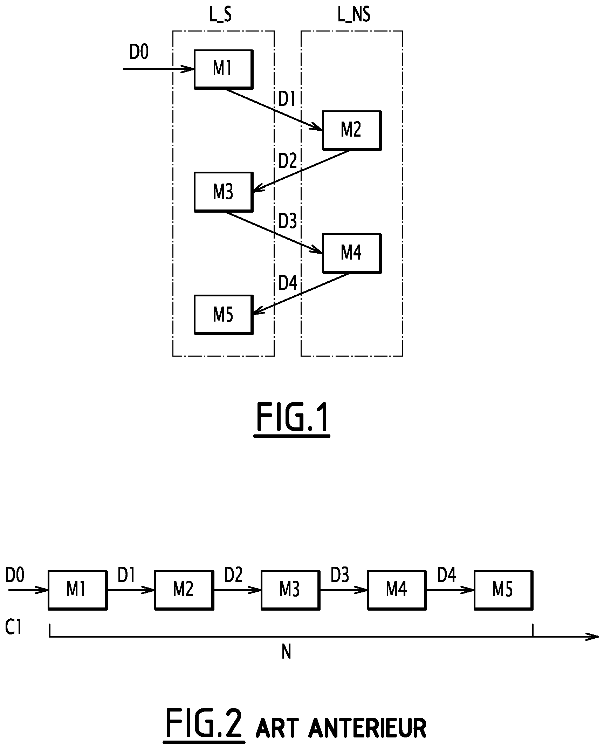

Est représenté sur la figure 1 un exemple d'une structure logique comportant deux logiciels entrelacés : un premier logiciel sécuritaire L_S et un second logiciel non sécuritaire L_NS. Cet exemple illustratif sera repris à travers l'ensemble de la description.

La structure logique comporte un premier module M1, appartenant au premier logiciel L_S. Le premier module M1 prend en entrée une donnée initiale D0 mise à jour. Il s'agit par exemple d'une donnée délivrée par un capteur et mise à jour régulièrement. Le premier module M1 est propre à générer une première donnée de sortie D1. Ainsi, le flux de données débute par l'évènement initial consistant à exécuter le module M1.

La structure logique comporte un second module M2, appartenant au second logiciel L_NS. Le second module M2 prend, en tant que donnée d'entrée, la donnée D1 générée en sortie du module M1. Le module M2 est propre à générer une seconde donnée de sortie D2.

La structure logique comporte un troisième module M3 appartenant au premier logiciel L_S. Le troisième module M3 prend, en tant que donnée d'entrée, la donnée D2 générée en sortie du module M2. Le module M3 est propre à générer une troisième donnée de sortie D3.

La structure logique comporte un quatrième module M4, appartenant au second logiciel L_NS. Le quatrième module M4 prend, en tant que donnée d'entrée, la donnée D3 générée en sortie du module M3. Le module M4 est propre à générer une quatrième donnée de sortie D4.

La structure logique comporte enfin un cinquième module M5 appartenant au premier logiciel L_S. Le cinquième module M5 prend, en tant que donnée d'entrée, la donnée D4 générer en sortie du module M4. Le cinquième module M5 ne génère aucune donnée en sortie. Le flux de données se termine par l'évènement final consistant en la fin de l'exécution du module M5.

Le premier logiciel L_S étant sécuritaire, les instructions des premier, troisième et cinquième modules M1, M3 et M5, doivent être exécutées en sécurité par un calculateur de sécurité.

Pour l'exécution de cette structure logique, où un logiciel sécuritaire et un logiciel non sécuritaire sont entrelacés, deux procédés sont connus.

Selon un premier procédé d'exécution connu, les logiciels sécuritaire L_S et non sécuritaire L_NS sont intégrés dans un logiciel commun sécuritaire qui est exécuté, en sécurité, sur un calculateur de sécurité C1.

La figure 2 représente schématiquement le premier procédé d'exécution connu pour le cas de la structure logique de la figure 1.

Au cours d'un cycle d'exécution N, le logiciel commun sécuritaire est exécuté.

Il débute par l'exécution du premier module M1. Le premier module M1 est effectivement exécuté lorsque la donnée initiale D0 a été mise à jour. Le premier module M1 conduit à la génération d'une première donnée de sortie D1.

Puis, toujours au cours du cycle N, l'exécution du logiciel commun sécuritaire se poursuit par l'exécution du second module M2. Celui-ci est effectivement exécuté car il dispose de la donnée d'entrée requise, en l'occurrence la donnée D1 venant d'être générée par le module M1. Le module M2 conduit à la génération d'une seconde donnée de sortie D2.

Toujours au cours du cycle N, l'exécution du logiciel commun sécuritaire se poursuit par l'exécution du troisième module M3. Celui-ci est effectivement exécuté car il dispose de la donnée d'entrée requise, à savoir la donnée D2 venant d'être générée par le second module M2. Le module M3 conduit à la génération d'une troisième donnée de sortie D3.

Toujours au cours du cycle N, l'exécution du logiciel commun sécuritaire se poursuit par l'exécution du quatrième module M4. Celui-ci est effectivement exécuté car il dispose de la donnée d'entrée requise, à savoir la donnée D3 venant d'être générée par le troisième module M3. Le module M4 conduit à la génération d'une quatrième donnée de sortie D4.

Enfin, toujours au cours du cycle N, l'exécution du logiciel commun sécuritaire se poursuit par l'exécution du cinquième module M5. Celui-ci est effectivement exécuté, car il dispose de la donnée d'entrée requise, à savoir la donnée D4 venant d'être générée par le module M4. La fin de l'exécution du cinquième module M5 termine l'exécution du logiciel commune sécuritaire. Celui-ci a été complètement exécuté au cours du seul cycle N.

Ainsi, selon ce premier procédé d'exécution connu, le logiciel non sécuritaire L_NS est en fait exécuté en sécurité par un calculateur de sécurité.

La prise en compte des contraintes de sécurité pour l'exécution des différents modules du logiciel non sécuritaire L_NS impose un surcoût lors du développement du logiciel non sécuritaire L_NS afin de l'intégrer avec le logiciel sécuritaire L_S, dans le logiciel commun sécuritaire.

De plus, lors de l'exécution du logiciel commun sécuritaire, le temps nécessaire pour l'exécution des modules du logiciel non sécuritaire L_NS est supérieur à ce qu'il est lorsque ces modules sont exécutés sur un calculateur non de sécurité.

Cependant, l'exécution complète du logiciel commun sécuritaire s'effectue durant un unique cycle d'exécution, conduisant malgré tout à de bonnes performances temporelles globales.

Selon un second procédé d'exécution connu, les logiciels sécuritaires L_S et non sécuritaires L_NS sont exécutés en parallèle, sur deux calculateurs distincts : le premier logiciel sécuritaire L_S est exécuté par un premier calculateur de sécurité C1, tandis que le second logiciel non sécuritaire L_NS est exécuté par un second calculateur non de sécurité C2. Le document :HARI KANNAN ET AL: "Decoupling Dynamic Information Flow Tracking with a dedicated coprocessor",DEPENDABLE SYSTEMS&NETWORKS, 2009. DSN '09. IEEE/IFIP INTERNATIONAL CONFERENCE ON, IEEE, PISCATAWAY, NJ, USA, 29 juin 2009 (2009-06-29), pages 105-114 divulgue une autre approche consistant à découpler certaines opérations dites DIFT (Dynamic Information Flow Tracking) sur un co-processeur dédié dans un contexte de sécurité d'exécution de logiciel.

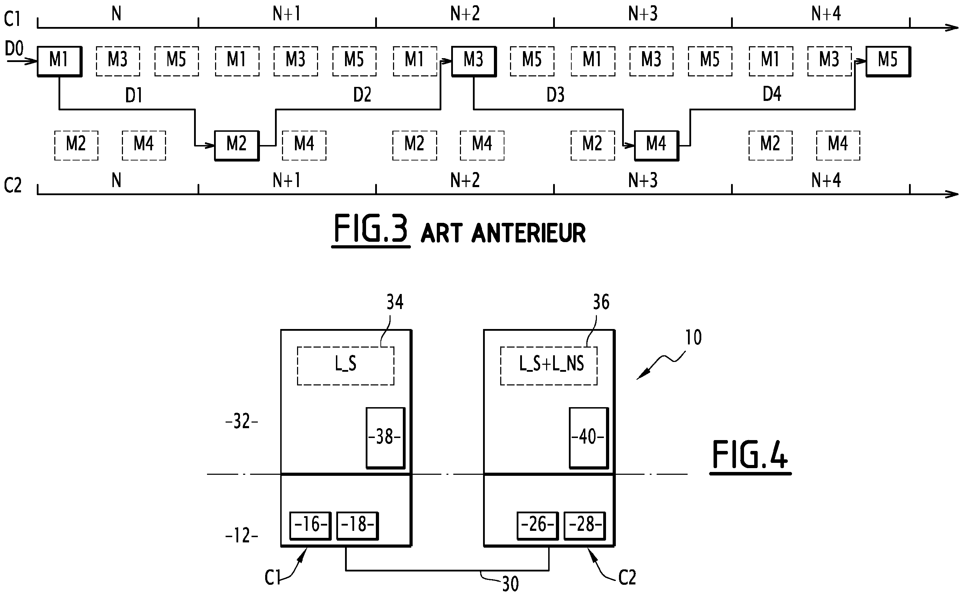

La figure 3 représente schématiquement le second procédé d'exécution connu pour le cas de la structure logique de la figure 1. Les cycles d'exécution des logiciels respectivement sur les premier et second calculateurs sont sensiblement synchrones. Seul un flux de données est représenté.

Au cours d'un premier cycle d'exécution N du logiciel sécuritaire L_S sur le premier calculateur C1, le premier module M1 est exécuté sur une donnée initiale D0 mise à jour, de manière à générer la première donnée de sortie D1.

Les modules M3 et M5 du logiciel sécuritaire L_S, qui ne disposent pas des données D2 et D4 mises à jour, ne sont pas exécutés.

Parallèlement, au cours d'un premier cycle d'exécution N du logiciel non sécuritaire L_NS sur le second calculateur C2, les modules M2 et M4, qui ne disposent pas des données D1 et D3 mises à jour, ne sont pas exécutés.

Au cours d'un second cycle d'exécution N+1, sur le premier calculateur C1, le module M1 ayant déjà été exécuté, n'est pas exécuté à nouveau.

Les modules M3 et M5 du logiciel sécuritaire L_S, qui ne disposent pas des données d'entrée D2 et D4 mises à jour, ne sont pas exécutés.

Parallèlement, sur le second calculateur C2, le module M2 du second logiciel L_NS, qui dispose maintenant de la donnée d'entrée D1 mise à jour, est effectivement exécuté. Il génère la seconde donnée de sortie D2.

En revanche, le module M4, qui ne dispose pas de la donnée d'entrée D3 mise à jour, n'est pas exécuté.

Au cours d'un troisième cycle d'exécution, N+2, sur le premier calculateur C1, le module M1 n'est pas exécuté à nouveau.

Le troisième module M3 du premier logiciel L_S, qui dispose maintenant d'une donnée d'entrée D2 mise à jour, est exécuté. Il génère la troisième donnée de sortie D3.

Le module M5, qui ne dispose pas de la donnée d'entrée D4 mise à jour, n'est pas exécuté.

Parallèlement, sur le second calculateur C2, le module M2, qui a déjà été exécuté, n'est pas exécuté une nouvelle fois.

Le module M4, qui ne dispose pas de la donnée d'entrée D3 mise à jour, n'est pas exécuté.

Au cours d'un quatrième cycle d'exécution, N+3, sur le premier calculateur C1, les modules M1 et M3, qui ont déjà été exécutés, ne sont pas exécutés à nouveau.

Le module M5, qui ne dispose pas de la donnée d'entrée D4 mise à jour, n'est pas exécuté.

Parallèlement, sur le second calculateur C2, le module M2, qui a déjà été exécuté, n'est pas exécuté une nouvelle fois.

En revanche, le module M4, qui dispose maintenant de la donnée d'entrée D3 mise à jour, est exécuté. Il délivre en sortie la donnée D4.

Enfin, au cours d'un cinquième cycle d'exécution, N+4, sur le premier calculateur C1, les modules M1 et M3, qui ont déjà été exécutés, ne sont pas exécutés à nouveau.

Le module M5, qui dispose de la donnée d'entrée D4 mise à jour, est exécuté.

Parallèlement, sur le second calculateur C2, au cours du cycle N+4, les modules M2 et M4, qui ont déjà été exécutés, ne sont pas exécutés une nouvelle fois.

Le flux de données initié au cycle N par la mise à jour de la donnée initiale et l'exécution du premier module M1, se termine au cycle N+4 avec la fin de l'exécution du cinquième module M5.

Ce second procédé d'exécution connu est simple à mettre en œuvre et permet d'exécuter en sécurité uniquement le logiciel sécuritaire L_S. Le développement du logiciel non sécuritaire L_NS n'est pas contraint par une exécution dans un environnement sécurisé, contrairement au premier procédé d'exécution connu.

Cependant, puisqu'un module d'un logiciel doit attendre que des données d'entrée mises à jour soient disponibles, ce second procédé d'exécution connu requiert un nombre important de cycles d'exécution. En conséquence, les performances temporelles globales de ce second procédé sont faibles.

L'invention a donc pour but de pallier les problèmes précités.

A cette fin, l'invention a pour objet un procédé d'exécution d'un logiciel sécuritaire et d'un logiciel non sécuritaire entrelacés selon les revendications annexées

L'invention et ses avantages seront mieux compris à la lecture de la description qui va suivre, donnée uniquement à titre d'exemple, et faite en se référant aux dessins annexés sur lesquels :
- la figure 1 est une représentation schématique de la structure logique d'un logiciel sécuritaire et d'un logiciel non sécuritaire entrelacés ;
- la figure 2 est une représentation schématique d'un premier procédé connu d'exécution de la structure logique de la figure 1 ;
- la figure 3 est une représentation schématique d'un second procédé connu d'exécution de la structure logique de la figure 1 ;
- la figure 4 est une représentation schématique d'un dispositif pour la mise en œuvre du procédé d'exécution selon l'invention ; et,
- la figure 5 est une représentation schématique d'un procédé selon l'invention d'exécution de la structure logique de la figure 1, mis en œuvre sur deux calculateurs, comme ceux du dispositif de la figure 4 ;
- la figure 6 est une représentation schématique du procédé de la figure 5 où plusieurs flux de données sont représentés ; et,
- la figure 7 est une représentation schématique d'un procédé d'exécution de la structure logique de la figure 1, mis en œuvre par un unique calculateur.

Dans un premier mode de réalisation représenté sur la figure 4, le procédé est mis en œuvre sur un dispositif 10 comportant deux calculateurs.

Le dispositif 10 comporte une couche matérielle 12 et une couche logicielle 32.

La couche matérielle 12 comporte :
- un premier calculateur C1, comportant un premier processeur 16 et une première mémoire 18 ;
- un second calculateur C2, comportant un second processeur 26 et une seconde mémoire 28.

Le premier calculateur C1 est un calculateur de sécurité, tandis que le second calculateur C2 est un calculateur non de sécurité.

Les premier et second calculateurs, C1 et C2, sont reliés l'un à l'autre par un lien de communication adapté 30 permettant l'échange de données. Il s'agit par exemple d'un lien série asynchrone ou synchrone.

La couche logicielle 32 comporte, pour le premier calculateur C1, un logiciel 34 qui correspond au logiciel sécuritaire L_S et, pour le second calculateur C2, un logiciel commun non sécuritaire 36 regroupant le logiciel sécuritaire L_S et le logiciel non sécuritaire L_NS entrelacés.

La couche logicielle 32 comporte également, pour le premier calculateur C1, un logiciel de transmission 38 et pour le second calculateur C2, un logiciel de transmission 40. Les logiciels de transmission 38 et 40 sont propres à émettre et recevoir des messages adaptés pour transférer la valeur d'une donnée stockée dans la mémoire du second calculateur C2 vers la mémoire du premier calculateur C1, et réciproquement.

Les logiciel 38 et 40 permettent une ségrégation des premier et second calculateurs C1 et C2.

Le logiciel de transmission 38 participant à l'environnement de sécurité à l'intérieur duquel est exécuté le logiciel sécuritaire L_S doit être exécuté en sécurité.

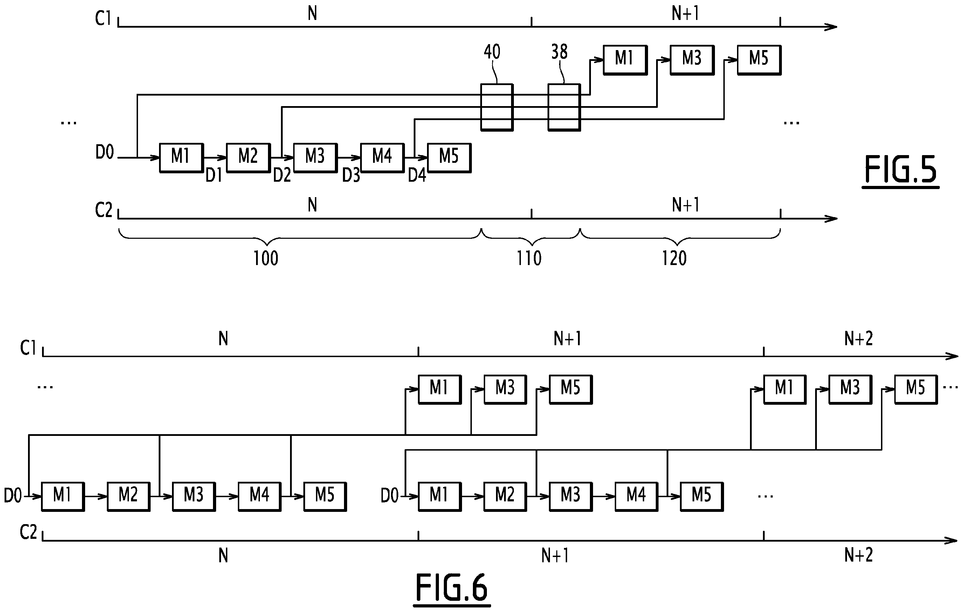

Le procédé d'exécution pour un flux de données est représenté schématiquement sur la figure 5.

Un premier cycle d'exécution N débute avec la mise à jour de la donnée initiale D0.

Dans une première étape 100, le logiciel commun non sécuritaire 36 est exécuté sur le second calculateur C2. Il est exécuté librement, ou tout au moins avec le niveau de sécurité associé au logiciel non sécuritaire L_NS.

L'exécution du logiciel commun non sécuritaire 36 débute par l'exécution du premier module M1. Celui-ci est effectivement exécuté puisqu'il dispose d'une donnée d'entrée mise à jour, en l'occurrence la donnée D0. Le premier module M1 conduit à la génération d'une première donnée de sortie D1.

Puis, toujours au cours du même cycle N, sur le second calculateur C2, le second module M2 est exécuté, car il dispose, à travers la donnée D1 venant d'être déterminée, de la donnée d'entrée mise à jour requise. L'exécution du second module M2 conduit à la génération d'une seconde donnée de sortie D2.

Toujours au cours du même cycle N, sur le second calculateur C2, le troisième module M3 est exécuté. En effet, il dispose, avec la donnée D2 venant d'être déterminée, de la donnée d'entrée mise à jour requise. L'exécution du troisième module M3 conduit à la génération d'une troisième donnée de sortie D3.

Toujours au cours du cycle N, sur le second calculateur C2, le quatrième module M4 est exécuté, car il dispose, avec la donnée D3 venant d'être déterminée, de la donnée d'entrée mise à jour requise. L'exécution du quatrième module M4 conduit à la génération d'une quatrième donnée de sortie D4.

Enfin, toujours au cours du cycle N, sur le second calculateur C2, le cinquième module M5, est exécuté, car il dispose, avec la donnée D4 venant d'être déterminée, de la donnée d'entrée requise. La fin de l'exécution du cinquième module M5 correspond à la fin de l'exécution du logiciel commun non sécuritaire 36 et à l'étape 100.

Le premier cycle N permet ainsi d'exécuter l'ensemble du logiciel commun non sécuritaire 36. Le premier cycle N correspond en fait à une exécution du logiciel commun non sécuritaire 36 sur le calculateur non de sécurité C2 pour le flux de données considéré.

Puis, au cours d'une deuxième étape 110, les logiciels 38 et 40 sont exécutés. Ils permettent de transférer, via le lien 30, de la mémoire du second calculateur C2, les valeurs des données de sortie des modules du logiciel non sécuritaire L_NS qui constituent des données d'entrée du logiciel sécuritaire L_S. L'exécution en émission du logiciel 40 correspond à la fin du premier cycle N, tandis que l'exécution en réception du logiciel 38 correspond au début du second cycle N+1 suivant.

Le second cycle N+1 se poursuit par une troisième étape 120, au cours de laquelle le logiciel 34, qui correspond au seul logiciel sécuritaire L_S, est exécuté en sécurité sur le premier calculateur C1.

Lorsqu'un module du logiciel sécuritaire L_S a besoin de la valeur d'une donnée d'entrée correspondant à une donnée de sortie d'un module du logiciel non sécuritaire L_NS, il vient lire la valeur de cette donnée d'entrée dans la mémoire du premier calculateur C1. Cette valeur a été générée par le second calculateur C2, lors de la première étape 100 du procédé, et transférée dans la mémoire du premier calculateur C1, lors de la seconde étape 110.

L'exécution du logiciel sécuritaire L_S débute par l'exécution du premier module M1. Ce premier module M1 est exécuté sur la donnée initiale D0 mise à jour au début du cycle N précédent. Le premier module M1 conduit à la génération d'une première donnée de sortie D1.

Puis, toujours au cours du second cycle d'exécution N+1, le troisième module M3 est exécuté, car il dispose d'une donnée d'entrée D2 mise à jour. Cette donnée mise à jour correspond à la donnée D2 déterminée par l'exécution du second module M2 du logiciel non sécuritaire 36 dans la première étape 100. Le troisième module M3 conduit à la génération d'une troisième donnée de sortie D3.

Puis, toujours au cours du second cycle d'exécution N+1, le cinquième module M3 est exécuté, car il dispose d'une donnée d'entrée D4 mise à jour. Cette donnée mise à jour correspond à la donnée D4 déterminée par l'exécution du quatrième module M4 du logiciel non sécuritaire 36 dans la première étape 100. La fin de l'exécution du cinquième M5 correspond à la fin de l'exécution du logiciel sécuritaire L_S et à l'étape 120.

Le second cycle N+1 permet d'exécuter l'ensemble du logiciel 34. Le second cycle N+1 correspond en fait à une exécution du logiciel sécuritaire sur le calculateur de sécurité C1 pour le flux de données considéré.

Le logiciel commun non sécuritaire 36, regroupant les logiciels sécuritaires L_S et non sécuritaires L_NS, qui n'est pas destiné à être exécuté en sécurité, est d'un développement et d'une mise au point simplifiés. En effet, il ne nécessite que la prise en compte des contraintes de sécurité associées au niveau de sécurité du logiciel non sécuritaire L_NS.

Un unique premier cycle est nécessaire pour l'exécution du logiciel commun non sécuritaire 36. La durée de ce premier cycle d'exécution est en générale plus courte que celle du logiciel commun sécuritaire conforme au premier procédé d'exécution connu de l'art antérieur, qui nécessite une exécution en sécurité. Pour qu'il y ait effectivement un gain dans la durée d'exécution, il faut évidemment que le temps supplémentaire d'exécution en non sécurité des modules du logiciel sécuritaire L_S dans le logiciel commun non sécuritaire selon le présent procédé soit inférieur au temps supplémentaire du à l'exécution en sécurité des modules du logiciel non sécuritaire L_NS dans le logiciel commun sécuritaire selon le procédé de l'art antérieur.

De préférence, durant la première étape du procédé, seuls sont effectivement exécuté, les modules du logiciel sécuritaire L_S qui sont nécessaires à la génération des données d'entrée des modules du logiciel non sécuritaire L_NS. Pour ce faire, le logiciel commun sécuritaire 36 intègre avantageusement un moyen d'appel. A chaque fois qu'un module du logiciel non sécuritaire L_NS a besoin d'une donnée d'entrée qui correspond à une donnée de sortie d'un module du logiciel sécuritaire L_S, le moyen d'appel lance l'exécution en non sécurité du module correspondant afin de générer la donnée requise. Ainsi par exemple, pour réduire la durée du premier cycle, il n'est pas nécessaire d'exécuter le cinquième module M5.

Dans la troisième étape 120, au cours du second cycle N+1, aucun des modules du logiciel non sécuritaire L_NS n'est exécuté. Seuls les modules du logiciel sécuritaire L_S sont effectivement exécutés.

Dans l'exemple présenté ici, les étapes 100, 110 et 120 ont été réalisées successivement dans le temps, la fin de l'exécution du logiciel commun non sécuritaire 36 déclenchant celles des logiciels 38 et 40, et la fin de l'exécution des logiciels 38 et 40 déclenchant celle du logiciel 34. Cependant en variante, les deux exécutions sur les deux calculateurs peuvent débuter simultanément. L'exécution du logiciel 34, c'est-à-dire du logiciel sécuritaire L_S, se mettant en attente jusqu'à disposer d'une valeur mise à jour pour la donnée d'entrée D2 pour exécuter le troisième module M3, puis se mettant à nouveau en attente jusqu'à disposer d'une valeur mise à jour pour la donnée d'entrée D4 pour l'exécution du cinquième module M5. Dans cette variante, l'échange de données entre les deux calculateurs s'effectue au fur et à mesure de la production des données. Les moyens de transmission 38 et 40 sont adaptés dans ce sens.

La figure 6 reprend la figure 5, mais permet de suivre plusieurs flux de données. Un premier flux initié au cycle N par une mise à jour de la donnée initiale D0 et l'exécution du premier module M1 se termine au cycle N+1 par la fin de l'exécution du module M5.

Un second flux initié au cycle N+1 par une mise à jour de la donnée initiale D0 et l'exécution du premier module M1 se termine au cycle N+2 par la fin de l'exécution du module M5.

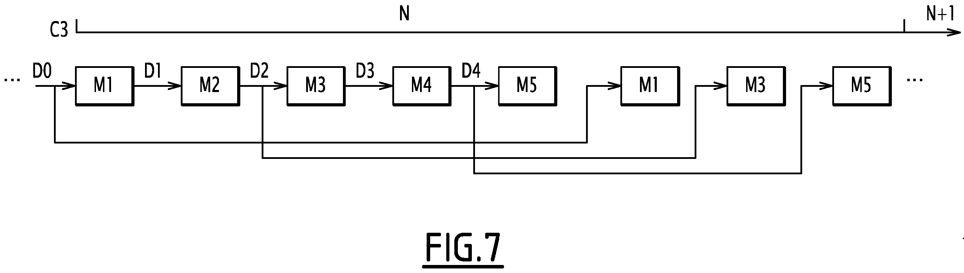

Dans encore une autre variante représentée à la figure 7, le précédé est mis en œuvre sur un dispositif comporte un unique calculateur C3 apte à constituer un environnement sécuritaire pour l'exécution en sécurité d'un logiciel sécuritaire et à constituer un environnement non sécuritaire pour l'exécution en non sécurité d'un logiciel non sécuritaire. Le calculateur C3 est ainsi propre à ségréguer les exécutions en sécurité du logiciel 34 (logiciel sécuritaire L_S) et en non sécurité du logiciel commun non sécuritaire 36 (logiciels non sécuritaire L_NS et sécuritaire L_S).

Dans cette variante, les étapes 100, 110 et 120 du procédé sont réalisées successivement au cours d'un unique cycle N d'exécution du logiciel commun non sécuritaire 36 puis du logiciel 34 (c'est-à-dire du sécuritaire L_S).

De manière plus générale, le procédé selon l'invention peut être mis en œuvre par différents dispositifs.

Dans l'exemple présenté ici, les étapes 100, 110 et 120 ont été réalisées successivement dans le temps, la fin de l'exécution du logiciel commun non sécuritaire 36 déclenchant celles des logiciels 38 et 40, et la fin de l'exécution des logiciels 38 et 40 déclenchant celle du logiciel 34. Cependant en variante, les deux exécutions sur les deux calculateurs peuvent débuter simultanément. L'exécution du logiciel 34, c'est-à-dire du logiciel sécuritaire L_S, se mettant en attente jusqu'à disposer d'une valeur mise à jour pour la donnée d'entrée D2 pour exécuter le troisième module M3, puis se mettant à nouveau en attente jusqu'à disposer d'une valeur mise à jour pour la donnée d'entrée D4 pour l'exécution du cinquième module M5. Dans cette variante, l'échange de données entre les deux calculateurs s'effectue au fur et à mesure de la production des données. Les moyens de transmission 38 et 40 sont adaptés dans ce sens.

La figure 6 reprend la figure 5, mais permet de suivre plusieurs flux de données. Un premier flux initié au cycle N par une mise à jour de la donnée initiale D0 et l'exécution du premier module M1 se termine au cycle N+1 par la fin de l'exécution du module M5.

Un second flux initié au cycle N+1 par une mise à jour de la donnée initiale D0 et l'exécution du premier module M1 se termine au cycle N+2 par la fin de l'exécution du module M5.

Dans encore une autre variante représentée à la figure 7, le précédé est mis en œuvre sur un dispositif comporte un unique calculateur C3 apte à constituer un environnement sécuritaire pour l'exécution en sécurité d'un logiciel sécuritaire et à constituer un environnement non sécuritaire pour l'exécution en non sécurité d'un logiciel non sécuritaire. Le calculateur C3 est ainsi propre à ségréguer les exécutions en sécurité du logiciel 34 (logiciel sécuritaire L_S) et en non sécurité du logiciel commun non sécuritaire 36 (logiciels non sécuritaire L_NS et sécuritaire L_S).

Dans cette variante, les étapes 100, 110 et 120 du procédé sont réalisées successivement au cours d'un unique cycle N d'exécution du logiciel commun non sécuritaire 36 puis du logiciel 34 (c'est-à-dire du sécuritaire L_S).

De manière plus générale, le procédé selon l'invention peut être mis en œuvre par différents dispositifs.

## Revendications

1. Procédé d'exécution d'un logiciel sécuritaire (L_S) et d'un logiciel non sécuritaire (L_NS) entrelacés,
au moins deux données de sortie générées en sortie de deux modules dudit logiciel non sécuritaire étant utilisées en tant que données d'entrée appliquée en entrée de deux modules du logiciel sécuritaire,
le logiciel sécuritaire étant un logiciel devant être exécuté en sécurité, c'est-à-dire de manière à en garantir le bon fonctionnement avec un niveau de confiance déterminé,
le logiciel non sécuritaire étant un logiciel dont l'exécution est moins contrainte que celle du logiciel sécuritaire,
**caractérisé en ce que** le procédé est mis en œuvre sur un dispositif (10) comportant des premier et second calculateurs (C1, C2) reliés l'un à l'autre par un lien de communication adapté (30) permettant l'échange de données, le premier calculateur (C1) étant un calculateur de sécurité, tandis que le second calculateur (C2) est un calculateur non de sécurité,
un calculateur de sécurité étant un calculateur répondant à certains critères de fonctionnement pour exécuter en sécurité les instructions du logiciel sécuritaire, et un calculateur non de sécurité étant un calculateur répondant à des critères de fonctionnement compatibles avec le niveau de sécurité du logiciel non sécuritaire,
les premier et second calculateurs étant ségrégués physiquement l'un de l'autre,
et **en ce que** le procédé consiste à :
a) - exécuter (100), sur le second calculateur (C2), au cours d'un premier cycle d'exécution, les logiciels sécuritaire (L_S) et non sécuritaire (L_NS) regroupés dans un logiciel commun non sécuritaire (36), de manière à mettre à jour lesdites au moins deux données de sortie dudit module du logiciel non sécuritaire ; et,
c) - exécuter (120), sur le premier calculateur (C1), au cours d'un second cycle d'exécution, le second cycle d'exécution étant ultérieur au premier cycle d'exécution, le logiciel sécuritaire (L_S), en utilisant, en tant que données d'entrée desdits deux modules du logiciel sécuritaire (L_S) lesdites au moins deux données de sortie mises à jour.

2. Procédé d'exécution d'un logiciel sécuritaire (L_S) et d'un logiciel non sécuritaire (L_NS) entrelacés, au moins deux données de sortie générées en sortie de deux modules dudit logiciel non sécuritaire étant utilisées en tant que données d'entrée appliquée en entrée de deux modules du logiciel sécuritaire,
le logiciel sécuritaire étant un logiciel devant être exécuté en sécurité, c'est-à-dire de manière à en garantir le bon fonctionnement avec un niveau de confiance déterminé,
le logiciel non sécuritaire étant un logiciel dont l'exécution est moins contrainte que celle du logiciel sécuritaire,
**caractérisé en ce que** le procédé est mise en œuvre sur un dispositif comportant un unique calculateur (C3) constituant un environnement sécuritaire pour l'exécution en sécurité du logiciel sécuritaire et un environnement non sécuritaire pour l'exécution selon le niveau de sécurité du logiciel non sécuritaire,
l'unique calculateur (C3) garantissant une ségrégation entre l'environnement sécuritaire et l'environnement non sécuritaire,
et **en ce que** le procédé consiste à :
a) - exécuter (100), au cours d'un premier cycle d'exécution sur l'unique calculateur (C3), dans l'environnement non sécuritaire, les logiciels sécuritaire (L_S) et non sécuritaire (L_NS) regroupés dans un logiciel commun non sécuritaire (36), de manière à mettre à jour lesdites au moins deux données de sortie dudit module du logiciel non sécuritaire ; et,
c) - exécuter (120), au cours d'un second cycle d'exécution sur l'unique calculateur (C3), le second cycle d'exécution étant ultérieur au premier cycle d'exécution, dans l'environnement sécuritaire, le logiciel sécuritaire (L_S), en utilisant, en tant que données d'entrée desdits deux modules du logiciel sécuritaire (L_S) lesdites au moins deux données de sortie mises à jour.

3. Procédé selon la revendication 1 ou la revendication 2, dans lequel, entre les étapes a) et c), le procédé comporte une étape b) consistant à transférer (110), dudit logiciel commun non sécuritaire (36) vers ledit logiciel sécuritaire (L_S), lesdites au moins deux données de sortie mise à jour.

## Patentansprüche

1. Verfahren zum Ausführen einer Sicherheits-Software (L_S) und einer Nicht-Sicherheits-Software (L_NS), die verschachtelt sind, wobei mindestens zwei Ausgangsdaten, die am Ausgang von zwei Modulen der Nicht-Sicherheits-Software generiert werden, als Eingangsdaten verwendet werden, die am Eingang von zwei Modulen der Sicherheits-Software angewendet werden,
wobei die Sicherheits-Software eine Software ist, die sicher ausgeführt werden muss, d. h. so dass ihre einwandfreie Funktion mit einer bestimmten Vertrauensstufe gewährleistet ist,
wobei die Nicht-Sicherheits-Software eine Software ist, deren Ausführung weniger eingeschränkt ist als die der Sicherheits-Software,
**dadurch gekennzeichnet, dass** das Verfahren auf einer Vorrichtung (10) umgesetzt ist, die erste und zweite Rechner (C1, C2) umfasst, die über eine geeignete Kommunikationsverbindung (30) miteinander verbunden sind, die den Datenaustausch ermöglicht, wobei der erste Rechner (C1) ein Sicherheitsrechner ist, während der zweite Rechner (C2) ein Nicht-Sicherheitsrechner ist,
wobei ein Sicherheitsrechner ein Rechner ist, der gewissen Betriebskriterien entspricht, um die Anweisungen der Sicherheits-Software sicher auszuführen, und ein Nicht-Sicherheitsrechner ein Rechner ist, der Betriebskriterien entspricht, die mit der Sicherheitsstufe der Nicht-Sicherheits-Software kompatibel sind,
wobei die ersten und zweiten Rechner voneinander räumlich getrennt sind,
und dass das Verfahren folgende Schritte umfasst:
a) Ausführen (100), auf dem zweiten Rechner (C2) im Verlauf eines ersten Ausführungszyklus, der Sicherheits-Software (L_S) und der Nicht-Sicherheits-Software, (L_NS), die in einer gemeinsamen Nicht-Sicherheits-Software (36) zusammengefasst sind, um die mindestens zwei Ausgangsdaten der zwei Modulen der Nicht-Sicherheits-Software zu aktualisieren; und
c) Ausführen (120), auf dem ersten Rechner (C1) im Verlauf eines zweiten Ausführungszyklus, wobei der zweite Ausführungszyklus nach dem ersten Ausführungszyklus kommt, der Sicherheits-Software (L_S) unter Verwendung als Eingangsdaten der beiden Module der Sicherheits-Software (L_S), der mindestens zwei aktualisierten Ausgangsdaten.

2. Verfahren zum Ausführen einer Sicherheits-Software (L_S) und einer Nicht-Sicherheits-Software (L_NS), die verschachtelt sind, wobei mindestens zwei Ausgangsdaten, die am Ausgang von zwei Modulen der Nicht-Sicherheits-Software generiert werden, als Eingangsdaten verwendet werden, die am Eingang von zwei Modulen der Sicherheits-Software angewendet werden,
wobei die Sicherheits-Software eine Software ist, die sicher ausgeführt werden muss, d. h. so dass ihre einwandfreie Funktion mit einer bestimmten Vertrauensstufe gewährleistet ist,
wobei die Nicht-Sicherheits-Software eine Software ist, deren Ausführung weniger eingeschränkt ist als die der Sicherheits-Software,
**dadurch gekennzeichnet, dass** das Verfahren auf einer Vorrichtung umgesetzt ist, die einen einzigen Rechner (C3) umfasst, der eine Sicherheitsumgebung zur sicheren Ausführung der Sicherheits-Software und eine Nicht-Sicherheitsumgebung zur Ausführung gemäß der Sicherheitsstufe der Nicht-Sicherheits-Software bildet,
wobei der einzige Rechner (C3) eine Abtrennung zwischen der Sicherheitsumgebung und der Nicht-Sicherheitsumgebung gewährleistet,
und dass das Verfahren folgende Schritte umfasst:
a) Ausführen (100), im Verlauf eines ersten Ausführungszyklus auf dem einzigen Rechner (C3) in der Nicht-Sicherheitsumgebung, der Sicherheits-Software (L_S) und der Nicht-Sicherheits-Software (L_NS), die in einer gemeinsamen Nicht-Sicherheits-Software (36) zusammengefasst sind, um die mindestens zwei Ausgangsdaten des zwei Modulen der Nicht-Sicherheits-Software zu aktualisieren; und
c) Ausführen (120), im Verlauf eines zweiten Ausführungszyklus auf dem einzigen Rechner (C3), wobei der zweite Ausführungszyklus nach dem ersten Ausführungszyklus kommt, in der Sicherheitsumgebung, der Sicherheits-Software (L_S) unter Verwendung als Eingangsdaten der beiden Module der Sicherheits-Software (L_S) der mindestens zwei aktualisierten Ausgangsdaten.

3. Verfahren nach Anspruch 1 oder 2, wobei das Verfahren zwischen den Schritten a) und c) einen Schritt b) umfasst, der darin besteht, die mindestens zwei aktualisierten Ausgangsdaten von der gemeinsamen Nicht-Sicherheits-Software (36) auf die Sicherheits-Software (L_S), zu übertragen (110).

## Claims

1. A method for executing a secure software application (L_S) and a non-secure software application (L_NS) interlaced one with the other, at least two output data generated at the output of two modules of said non-secure software application being used as input data applied at the input of two modules of the secure software application, the secure software application being a software requiring to be executed in security, i.e. so as to guarantee its correct operation with a determined level of confidence, the non-secure software application being a software whose execution is less constrained that the execution of the secure software application,
**characterised in that** the method is implemented by a device (10) comprising first and second processing units (C1, C2) connected one with the other through a suitable communication link (30) allowing data exchange, the first computing unit (C1) being a secure computing unit, whereas the second computing unit (C2) is a none secure computing unit, a secure computing unit being a computing unit respecting certain operative criteria for the execution in security of the instructions of the security software application, and a non security computing unit being a computing unit that respects operative criteria compatible with the security level of the non secure software application,
the first and second computing units being physically segregated one from the other, and **in that** the method consists in :
a) - executing (100), on the second computing unit (C2), during a first execution cycle, the secure (L_S) and non-secure (L_NS) software applications grouped together in a common non-secure software application (36), so as to update said at least two output data of said two modules of the non-secure software application; and,
c) - executing (120), on the first computer unit (C1), during a second execution cycle, the second execution cycle being after the first execution cycle, the secure software application (L_S), using, as input data for said module of the secure software application (L_S), said at least two output data updated.

2. A method for executing a secure software application (L_S) and a non-secure software application (L_NS) interlaced one with the other, at least two output data generated at the output of two modules of said non-secure software application being used as input data applied at the input of two modules of the secure software application, the secure software application being a software requiring to be executed in security, i.e. so as to guarantee its correct operation with a determined level of confidence, the non-secure software application being a software whose execution is less constrained that the execution of the secure software application,
**characterised in that** the method is implemented by a device (10) comprising only one processing unit (C3) constituting a secure environment for the execution in security of the secure software application and a non secure environment for the execution of the non secure software according to its level of security, the only computing unit (C3) guaranteeing a segregation between the secure environment and the non secure environment,
and **in that** the method consists in :
a) - executing (100), during a first execution cycle on the only computing unit (C3), in the non secure environment,, the secure (L_S) and non-secure (L_NS) software applications grouped together in a common non secure software application (36), so as to update said at least two output data of said two modules of the non-secure software application; and,
c) - executing (120), during a second execution cycle on the only computing unit (C3), the second execution cycle being after the first execution cycle, in the secure environment, the secure software application (L_S), using, as input data of the two modules of the secure software application (L_S), said at least two output data updated.

3. The method according to claim 1 or claim 2, wherein, between steps a) and c), the method comprises a step b) consisting in transferring (110), from said common non secure software application (36) to the secure software application (L_S), said at least two output data updated.
